# EUROPÄISCHE PATENTSCHRIFT

(11) **EP 2 159 441 B1**
(45) Veröffentlichungstag und Bekanntmachung des Hinweises auf die Patenterteilung: **29.06.2011**
(21) Anmeldenummer: 08163254.9
(22) Anmeldetag: 29.08.2008
(51) Int. Cl.: F16D 65/12

(54) **Schwimmende Bremsscheibe**
Floating brake disc
Plaque de frein flottante

(43) Veröffentlichungstag der Anmeldung: 03.03.2010
(73) Patentinhaber: Spacek, Stanislav, 53401 Holice (CZ)
(72) Erfinder: Spacek, Stanislav, 53401 Holice (CZ)
(74) Vertreter: Cremer, Ulrike Theresia

(56) Entgegenhaltungen:
- DE-A1- 19 726 674
- DE-A1-102004 002 710
- US-B2- 6 957 726

## Beschreibung

Die vorliegende Erfindung betrifft eine schwimmende Bremsscheibe, insbesondere für ein Motorrad, gemäß dem Oberbegriff des Anspruchs 1.

Mit dem Begriff "schwimmende Bremsscheibe" wird eine zweiteilige Bremsscheibe bezeichnet. Eine schwimmende Bremsscheibe besteht aus Innenring und Außenring, die miteinander über Verbindungsmittel gekoppelt sind. Der Innenring wird auch als Trägertopf bezeichnet und der Außenring als Bremskranz oder als Rotor. Der Außenring ist Träger des Bremsbandes, d. h., auf ihm laufen die Bremsbeläge. Über den Innenring erfolgt die Ankupplung an das Rad. Schwimmende Bremsscheiben wurden entwickelt, um Überhitzungsprobleme einteiliger Bremsscheiben zu vermeiden. Problematisch für die Haltbarkeit der schwimmenden Bremsscheiben sind die Verbindungsmittel, auf welche beim Bremsvorgang starke Kräfte einwirken, so dass es teilweise zum Abscheren der Verbindungsmittel und damit zum Bruch der Bremsscheibe kommen kann. in jedem Fall sind die Verbindungsmittel der Abnutzung ausgesetzt.

Einen Vorschlag zur Verbesserung der oben erwähnten Probleme schwimmender Bremsscheiben unterbreitet die US 6,957,726 B2. Bei den in diesem Patent beschriebenen Ausführungsbeispielen wird das Drehmoment vom Rotor auf die Nabe verlagert. Damit wird die Last von den Verbindungsmitteln weggenommen und von speziellen Verzahnungen getragen.

Die Bremsscheibe nach oben genanntem US-Patent hat diverse Nachteile. So ist die Fertigung sehr aufwändig, da die Verzahnungsabschnitte exakt gefertigt sein müssen, um das gewünschte Ineinandergreifen und die Entlastung der Verbindungsmittel überhaupt zu ermöglichen. Durch die ständige Belastung der Anlagefläche im Verzahnungsbereich zwischen Innen- und Außenring gibt es einen verhältnismäßig hohen Verschleiß.

Aufgabe der vorliegenden Erfindung ist daher, eine Bremsscheibe zu schaffen, welche die aus dem US-Patent bekannten Nachteile vermeidet. Insbesondere soll die Fertigung vereinfacht werden und der Verschleiß der Bremsscheibe verbessert werden.

Diese Aufgabe wird gelöst durch eine schwimmende Bremsscheibe nach Anspruch 1. Vorteilhafte Ausgestaltungen sind Gegenstand der Unteransprüche.

Die erfindungsgemäße Bremsscheibe ist vor allem für Motorräder vorgesehen, besonders für Off-Road-Motorräder, auch als Moto-Cross-Motorräder oder Geländemotorräder bezeichnet. Sie kann jedoch auch in anderen Fahrzeugen, wie zum Beispiel Autos, LKWs, Fahrrädern, Flugzeugen etc., eingesetzt werden. Ihrer Art gemäß umfasst die schwimmende Bremsscheibe einen Außenring, welcher das Bremsband trägt und einen Innenring, über welchen die Bremsscheibe mit einem Rad verbunden wird. Erfindungsgemäß ist auf einem zwischen Außenring und Innenring konzentrisch zur Bremsscheibe verlaufenden Kreisbogen ein Berührungsbereich zwischen Außenring und Innenring ausgebildet. In diesem Berührungsbereich sind Außenring und innenring über mindestens ein Verbindungsmittel, insbesondere einem Niet, miteinander verbunden. Der Innenring weist seitlich dieses Berührungsbereichs einen Vorsprung auf, der auf eine Weise in eine Ausbuchtung des Außenrings eingreift, dass zumindest beim Betrieb der Bremsscheibe, zum Beispiel im Motorrad, eine Anlagefläche zwischen dem Innenring und dem Außenring ausbildbar ist. Anders ausgedrückt bedeutet dies, dass neben dem Berührungsbereich und damit neben dem Verbindungsmittel Innen- und Außenring über Vorsprung und entsprechende Ausbuchtung ineinander greifen können. Mindestens beim Bremsvorgang des Fahrzeuges, insbesondere des Motorrads, gelangen der Vorsprung des Innenrings und die entsprechende Ausbuchtung des Außenrings in Kontakt und bewirken so einen kurzzeitigen Formschluss zwischen Innenring und Außenring über die geschaffene Anlagefläche.

Vorteil der Erfindung ist, dass die Kraftübertragung auf Verbindungsmittel und Anlagefläche, die durch Vorsprung und Ausbuchtung geschaffen wird, aufgeteilt wird. Es werden die beim Betrieb der Bremsscheibe auftretenden Kräfte sowohl über die Verbindungsmittel als auch über die durch Vorsprung und Ausbuchtung geschaffene Anlagefläche verteilt. Dies hat den Vorteil, dass, anders als bei der US 6,957,726 B2, die Fertigung weit weniger präzise erfolgen muss und dass durch die zusätzliche Lasttragung des Verbindungsmittels der Verschleiß der Bremsscheibe als Ganzes reduziert wird.

Bei einer bevorzugten Ausführung ist ein Spiel zwischen Vorsprung und Ausbuchtung vorhanden, so dass Außenring und Innenring in diesem Bereich nicht ständig aneinander anliegen, sondern dass die Anlagefläche nur durch Relativbewegung von Innenring und Außenring ausgebildet wird. Dies bedeutet, dass die Anlagefläche nur dann ausgebildet wird, wenn sich Innenring und Außenring relativ zueinander bewegen. Dies ist beispielsweise beim Verzögerungsvorgang der Fall oder durch eine rotatorische Querbewegung.

Im ungebremsten Betrieb ist bevorzugt, dass die Anlagefläche zwischen Vorsprung und Ausbuchtung nicht ausgebildet wird, sondern dass das mindestens eine Verbindungsmittel allein schleppt. Dies bedeutet, dass im ungebremsten Zustand, sämtliche Kräfteübertragungen über das Verbindungsmittel erfolgen. Beim Bremsvorgang jedoch, bei welchem besonders hohe Kräfte auftreten, wird die Anlagefläche zwischen Innen- und Außenring ausgebildet und es kommt zum Formschluss zwischen diesen Teilen. Damit werden die Kräfte im Bremsvorgang auf Verbindungsmittel und Anlagefläche aufgeteilt. Durch diese Maßnahme kann das Verbindungsmittel schwächer ausgelegt werden als bei üblichen schwimmenden Bremsscheiben des Standes der Technik.

Gemäß einer bevorzugten Ausführung kann die Form des Vorsprunges als nasenförmig oder als schnabelförmig bezeichnet werden. Bevorzugt ist dort, wo der Vorsprung des Innenrings auf die Ausbuchtung des Außenringes trifft, der Vorsprung radial verlaufend. Dies bedeutet, dass eine Seite oder Kante des Vorsprungs des Innenrings radial ausgebildet ist. Unter "radial" wird dabei verstanden, dass die Kante des Vorsprunges auf einem Radius der Bremsscheibe als Ganzes oder des Innenrings bzw. auf einer Verlängerung des Radius des Innenrings liegt. Durch diese Maßnahme wird eine radiale Anlagefläche zwischen dem Innenring und dem Außenring ausgebildet. Gemäß einer weiteren bevorzugten Ausführung weist der Rotor im Bereich des Vorsprungs zumindest eine Durchbrechung, die auch als "Loch" bezeichnet werden könnte, auf. Diese Durchbrechung ist insbesondere keilförmig, auch als dreieckig zu bezeichnen, wobei eine Seite dieses Dreiecks bzw. Keils insbesondere parallel zu der Kante des Vorsprungs verläuft, welche zusammen mit dem entsprechenden Bereich der Ausbuchtung des Außenrings die erfindungsgemäße Anlagefläche ausbildet. Die Durchbrechungen folgen der Form des Vorsprungs. Vorzugsweise sind die Ecken der Durchbrechungen gerundet. Diese erfindungsgemäße Gestaltung bewirkt einen verbesserten Kraftfluss im Innenring. Die nach Ausbildung der Anlagefläche, zum Beispiel beim Bremsvorgang, auf den Vorsprung und damit den Innenring einwirkenden Kräfte werden durch die bevorzugte Ausgestaltung der Durchbrechungen so in den Innenring eingeleitet, dass eine möglichst günstige Verteilung der auftretenden Kräfte erfolgen kann.

Gemäß einer weiteren bevorzugten Ausführung sind die Ecken der Ausbuchtung, welche beim Außenring ausgebildet ist, gerundet. Durch diese Maßnahme wird der Kraftfluss in der Bremsscheibe, genauer im Außenring der Bremsscheibe, weiter verbessert.

Nachfolgend wird die Erfindung anhand der Zeichnungen näher erläutert und beschrieben. Es zeigen:
Figur 1 eine erfindungsmäße Bremsscheibe in schematischer Darstellung;
Figur 2 den Schnitt entlang der Linie A-A in Figur 1; und
Figur 3 das Detail III aus Figur 1 in vergrößerter Darstellung.

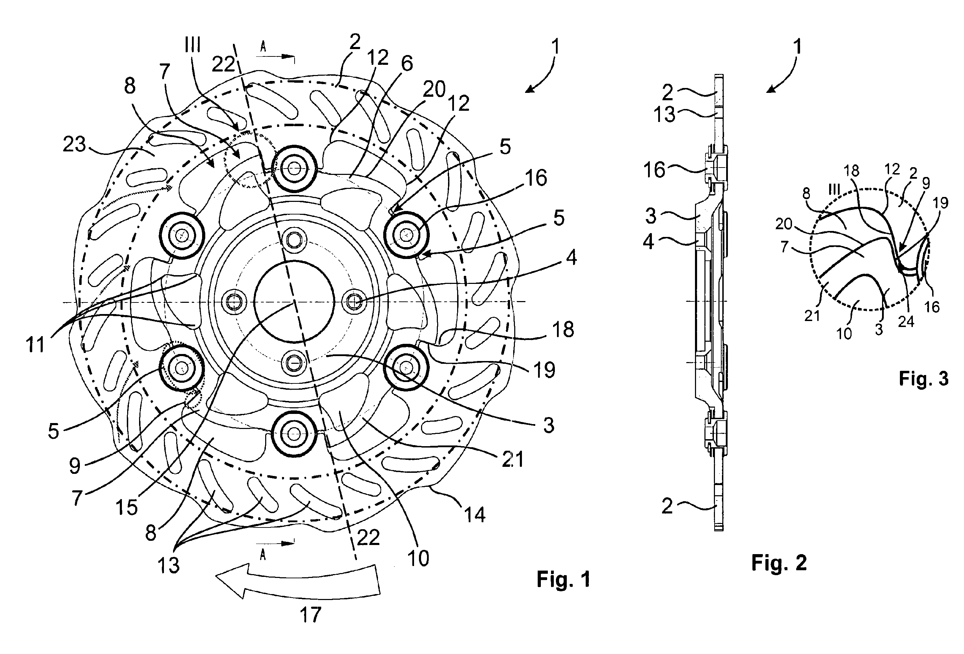

In den Figuren 1 und 2 ist eine erfindungsgemäße schwimmende Bremsscheibe 1 dargestellt, wohingegen Figur 3 das Detail III vergrößert zeigt. Die dargestellte Bremsscheibe ist bevorzugt zum Einsatz in einem Motorrad bestimmt. Sie weist einen Innenring 3 und einen Außenring 2 auf. Auf dem Außenring befindet sich das Bremsband 23, d. h., der Bereich, auf welchem der Bremsklotz der Fahrzeugbremse läuft. Das Bremsband ist in der Darstellung strichpunktiert eingetragen. Im Zentrum des Innenrings 3 sind Bohrungen 4 vorgesehen, über die mit Hilfe von Befestigungsmitteln (nicht dargestellt) die Ankupplung an ein Fahrzeugrad erfolgt.

Erfindungsgemäß ist ein Berührungsbereich 5 auf einem Kreisbogen 6 (strichliert dargestellt) zwischen Innenring 3 und Außenring 2 vorgesehen. Der Kreisbogen 6 verläuft konzentrisch zur Bremsscheibe 1, dies bedeutet, dass der Mittelpunkt des Kreisbogens 6 und der Mittelpunkt der Bremsscheibe 1 zusammenfallen. Dieser Mittelpunkt ist mit dem Bezugszeichen 15 bezeichnet. Zu erkennen ist weiter, dass nicht nur der Kreisbogen 6 konzentrisch zur Bremsscheibe 1 verläuft, sondern dass die Bremsscheibe 1, der Außenring 2 und der Innenring 3 jeweils konzentrisch ausgebildet sind. In dem Berührungsbereich 5 stoßen Außenring 2 und Innenring 3 aufeinander. Wesentlich ist die Form des Berührungsbereiches, welche dem Kreisbogen 6 folgt. Der Berührungsbereich hat folglich nicht die Form einer Geraden, sondern ist bogenförmig mit einem Winkel, der sich nach dem Kreisbogen bestimmt, auf welchem die Berührungsfläche verläuft. Im Berührungsbereich 5 sind Innenring 2 und Außenring 3 miteinander über Verbindungsmittel 16 miteinander verbunden. Als bevorzugtes Beispiel eines solchen Verbindungsmittels 16 sei ein Niet genannt.

Bevorzugt weist die Bremsscheibe 1 mehrere, insbesondere gleichmäßig verteilte, Berührungsbereiche 5 auf. In der Darstellung der Figur 1 sind sechs solcher Berührungsbereiche vorgesehen. Es können jedoch auch weniger oder mehr, beispielsweise vier, fünf, sieben oder acht, solcher Berührungsbereiche vorgesehen sein. Auch noch mehr oder noch weniger als die beschriebenen vier bis acht, können vorhanden sein. Es sind diese bevorzugt gleichmäßig verteilt. Pro Berührungsbereich 5 ist zumindest ein Verbindungsmittel 16 vorgesehen. Es können auch mehrere Verbindungsmittel, beispielsweise zwei Verbindungsmittel 16 pro Berührungsbereich 5 vorgesehen sein.

Gemäß der Erfindung ist seitlich des Berührungsbereichs 5 am Innenring 3 ein Vorsprung 7 vorgesehen. Aus der Darstellung der Figur 1 wird ersichtlich, was mit dem Begriff "seitlich des Berührungsbereichs" gemeint ist. Wird auf dem Kreisbogen 6 in Drehrichtung, dargestellt durch den Pfeil 17, vorangegangen, so trifft man zunächst auf den Vorsprung 7 und gelangt dann unmittelbar weiter zum Berührungsbereich 5. In Aufsicht betrachtet, wie in Figur 1 dargestellt, liegt der Vorsprung 7 links vom Berührungsbereich 5 und damit links vom Verbindungsmittel 16. Er befindet sich sozusagen seitlich entgegen der Drehrichtung der Bremsscheibe 1.

Korrespondierend zum Vorsprung 7 ist eine Ausbuchtung 8 im Außenring 2 gestaltet. Die Ausbuchtung kann auch als Ausnehmung bezeichnet werden. Durch die korrespondierende Gestalt wird eine Anlagefläche 9 ausgebildet. Wie bereits eingangs erläutert, kommt es zumindest beim Bremsvorgang zur Ausbildung dieser Anlagefläche und damit zum Formschluss zwischen Außenring 2 und Innenring 3.

Die Ausbuchtung 8 weist gerundete Ecken 12 auf. Erfindungsgemäß verläuft die Kante 18 der Ausbuchtung 8, welche der Kante 19 des Vorsprungs 7 gegenüber liegt, gerade. In der Ausführung der Figur 1 ist die Ausbuchtung 8 symmetrisch gestaltet. Anders der Vorsprung 7. Dieser weist Schnabelform, auch als Nasenform zu bezeichnen, auf. Dies bedeutet, dass die erste Kante 19, welche der Kante 18 der Ausbuchtung 8 zugewandt ist und mit ihr zusammen die Anlagefläche 9 bildet, zu der daneben liegenden zweiten Kante 20 des Vorsprungs 7 einen rechten Winkel oder einen spitzen Winkel ausbildet. Die zweite Kante 20 fällt in Richtung zum Kreisbogen 6 ab, um dann im Berührungsbereich 5 mit dem Kreisbogen 6 zu verlaufen. Der Innenring 3 weist eine Durchbrechung 10 auf. Die Durchbrechung 10 erstreckt sich bis in den Vorsprung 7 hinein. Ihre Gestalt kann als keilförmig oder auch als dreieckig bezeichnet werden. Die Ecken 11 der Durchbrechung 10 sind bevorzugt gerundet. Die Form der Durchbrechung 10 folgt der Form des Vorsprungs 7. Ihre Funktion liegt in der optimierten Kräfteableitung, ausgehend von der Anlagefläche 9 über die erste Kante 19 des Vorsprungs 7, den durch die Durchbrechung 10 gebildeten Steg 21 bis zum Innen des Innenrings 3.

Im Bereich des Bremsbandes sind bevorzugt Öffnungen, insbesondere Schlitze 13, ausgebildet. Sie sind so gestaltet, dass die Kräfte, welche vor allem beim Bremsvorgang auftreten, zum Innenring 3 hingelenkt werden. Darüberhinaus nehmen sie Wärmeableitungsfunktion wahr. Die Außenkontur 14 der Bremsscheibe 1 ist in der dargestellten Ausführung nicht kreisförmig, sondern in einer davon abweichenden Form, nämlich wellenförmig.

Die Anlagefläche 9 und damit die erste Kante 19 und die Kante 18 sind radial ausgerichtet. Mit "radial" ist gemeint, dass diese auf einem Radius der Bremsscheibe 1 liegen. Dieser Radius ist durch eine gestrichelte Linie 22 eingetragen und zur besseren Darstellung verlängert.

In der vergrößerten Darstellung der Figur 3 ist insbesondere das Spiel 24 gut zu erkennen. Zwischen der Kante 19 des Vorsprungs 7 und der Kante 18 der Ausbuchtung 8 verbleibt ein gewisser Zwischenraum, als Spiel bezeichnet. Im ungebremsten Zustand - in der Figur 3 dargestellt - berühren sich Vorsprung 7 und Ausbuchtung 8 bevorzugt nicht; es schleppt das Verbindungsmittel 16 alleine. Beim Verzögerungsvorgang kommt es zu einer Relativbewegung zwischen Innenring 3 und Außenring 2, wodurch die Kante 19 auf die Kante 18 drückt und so eine Anlagefläche 9 zwischen Innenring 3 und Außenring 2 ausgebildet wird. Durch den Reibschluss zwischen Außen- und Innenring werden Kräfte übertragen und sowohl das Verbindungsmittel 16 als auch die Anlagefläche 9 schleppen in diesem Zustand. Das Verbindungsmittel 16 wird entlastet.

### Bezugszeichenliste

- 1: Bremsscheibe
- 2: Außenring
- 3: Innenring
- 4: Bohrung
- 5: Berührungsbereich
- 6: Kreisbogen
- 7: Vorsprung
- 8: Ausbuchtung
- 9: Anlagefläche
- 10: Durchbrechung
- 11: Ecke von Durchbrechung
- 12: Ecke von Ausbuchtung
- 13: Schlitz
- 14: Außenkontur
- 15: Mittelpunkt
- 16: Verbindungsmittel
- 17: Pfeil
- 18: Kante von Ausbuchtung
- 19: Erste Kante von Vorsprung
- 20: Zweite Kante von Vorsprung
- 21: Steg
- 22: Radius
- 23: Bremsband
- 24: Spiel

## Patentansprüche

1. Schwimmende Bremsscheibe (1), insbesondere für ein Motorrad, insbesondere Off-Road-Motorrad, die einen Außenring (2), welcher ein Bremsband (23) trägt, und einen Innenring (3), über welchen die Bremsscheibe (1) mit einem Fahrzeugrad verbunden wird, umfasst,
**dadurch gekennzeichnet, dass**
auf einem zwischen Außenring (2) und Innenring (3) konzentrisch zur Bremsscheibe (1) verlaufenden Kreisbogen (6) zumindest ein dem Kreisbogen (6) folgender Berührungsbereich (5), insbesondere mehrere dem Kreisbogen (6) folgende Berührungsbereiche (5),
zwischen Außenring (2) und Innenring (3) ausgebildet ist bzw. sind, wobei Außenring (2) und Innenring (3) in dem zumindest einen Berührungsbereich (5) mit zumindest einem Verbindungsmittel (16), insbesondere einem Niet, miteinander verbunden sind,
und dass seitlich des zumindest einen Berührungsbereichs (5) der Innenring (3) einen Vorsprung (7) aufweist, der so in eine Ausbuchtung (8) des Außenrings (2) eingreift, dass zumindest beim Betrieb der Bremsscheibe (1) in einem Fahrzeug, insbesondere Motorrad, eine Anlagefläche (9) zwischen dem Innenring (3) und dem Außenring (2) ausbildbar ist.

2. Bremsscheibe nach Anspruch (1), **dadurch gekennzeichnet, dass** eine Kante (19) des Vorsprungs (7) des Innenrings (3) radial verläuft und eine Kante (20) der Ausbuchtung (8) des Außenrings (2) korrespondierend gestaltet ist, so dass eine radiale Anlagefläche (9) zwischen dem Innenring (3) und dem Außenring (2) ausbildbar ist.

3. Schwimmende Bremsscheibe (1) nach einem der vorstehenden Ansprüche,
**dadurch gekennzeichnet, dass** der Vorsprung (7) nasen- oder schnabelförmig ist.

4. Schwimmende Bremsscheibe (1) nach einem der vorstehenden Ansprüche,
**dadurch gekennzeichnet, dass** zwischen dem Vorsprung (7) und der Ausbuchtung (8) ein Spiel (24) vorhanden ist, so dass die Anlagefläche (9) durch Relativbewegung, insbesondere beim Bremsvorgang, von Innenring (3) und Außenring (2) ausgebildet wird.

5. Schwimmende Bremsscheibe (1) nach Anspruch 4, **dadurch gekennzeichnet, dass** bei einem ungebremsten Betrieb des Fahrzeugs; insbesondere des Motorrads, das Spiel (24) dazu führt, dass die Anlagefläche (9) nicht ausgebildet ist und das mindestens eine Verbindungsmittel (16) alleine schleppt.

6. Schwimmende Bremsscheibe (1) nach einem der vorstehenden Ansprüche, **dadurch gekennzeichnet, dass** der Innenring (3) im Bereich des Vorsprungs (7) Durchbrechungen (10) aufweist, insbesondere keilförmige Durchbrechungen (10), die einer Form des Vorsprungs (7) folgen, wobei die Ecken (11) der Durchbrechungen (10) vorzugsweise gerundet sind.

7. Schwimmende Bremsscheibe (1) nach einem der vorstehenden Ansprüche, **dadurch gekennzeichnet, dass** mehrere Berührungsbereiche (5) ausgebildet sind, welche insbesondere gleichmäßig über den Kreisbogen (6) verteilt sind.

8. Schwimmende Bremsscheibe (1) nach einem der vorstehenden Ansprüche, **dadurch gekennzeichnet, dass** auf dem Außenring (2), insbesondere im Bremsband (23), Öffnungen, insbesondere Schlitze (13) und/oder lochartige Öffnungen, vorhanden sind, die so ausgebildet sind, dass eine Kraftleitung in Richtung zum Innenring (3) beim Bremsvorgang erfolgt.

9. Schwimmende Bremsscheibe (1) nach einem der vorstehenden Ansprüche, **dadurch gekennzeichnet, dass** die Bremsscheibe (1) eine Außenkontur (14) hat, die von einem konzentrischen Kreisbogen (6) abweicht, insbesondere eine wellenförmige Außenkontur (14).

10. Schwimmende Bremsscheibe (1) nach einem der vorstehenden Ansprüche, **dadurch gekennzeichnet, dass** Außenring (2), Innenring (3) und Berührungsbereich (5) konzentrisch sind.

## Claims

1. Floating brake disc (1), particularly for a motorcycle, particularly an off-road motorcycle, which comprises an outer ring (2) which carries a brake band (23) and an inner ring (3) via which the brake disc (1) is connected to a wheel of a vehicle,
**characterised in that**
on a circular arc (6) between the outer ring (2) and the inner ring (3), extending concentrically with the brake disc (1), is/are formed between the outer ring (2) and the inner ring (3) at least one contact region (5), which follows the circular arc (6), in particular a number of contact regions (5), which follow the circular arc (6),
the outer ring (2) and inner ring (3) being connected to one another in the at least one contact region (5) with at least one connecting means (16), in particular a rivet,
and that, next to the at least one contact region (5), the inner ring (3) has a projection (7) which engages in an indentation (8) in the outer ring (2) in such a way that a bearing surface (9) between the inner ring (3) and the outer ring (2) can be formed, at least when the brake disc (1) is in operation in a vehicle, particularly a motorcycle.

2. Brake disc according to claim 1, **characterised in that** an edge (19) of the projection (7) on the inner ring (3) extends radially, and an edge (20) of the indentation (8) in the outer ring (2) is configured in a corresponding manner, so that a radial bearing surface (9) between the inner ring (3) and the outer ring (2) can be formed.

3. Floating brake disc (1) according to one of the preceding claims, **characterised in that** the projection (7) is nose-shaped or beak-shaped.

4. Floating brake disc (1) according to one of the preceding claims, **characterised in that** there is a clearance (24) between the projection (7) and the indentation (8), so that the bearing surface (9) is formed by relative movement, particularly during the braking operation, of the inner ring (3) and outer ring (2).

5. Floating brake disc (1) according to claim 4, **characterised in that**, during unbraked operation of the vehicle, particularly the motorcycle, the clearance (24) leads to the fact that the bearing surface (9) is not formed and that solely the at least one connecting means (16) trails.

6. Floating brake disc (1) according to one of the preceding claims, **characterised in that** the inner ring (3) has, in the region of the projection (7), perforations (10), in particular wedge-shaped perforations (10), which follow a shape of the projection (7), the corners (11) of the perforations (10) preferably being rounded.

7. Floating brake disc (1) according to one of the preceding claims, **characterised in that** a number of contact regions (5) are formed, which are distributed, in particular evenly, over the circular arc (6).

8. Floating brake disc (1) according to one of the preceding claims, **characterised in that**, on the outer ring (2), in particular in the brake band (23), there are openings, in particular slots (13) and/or hole-like openings, which are constructed in such a way that force is conducted towards the inner ring (3) during the braking operation.

9. Floating brake disc (1) according to one of the preceding claims, **characterised in that** the brake disc (1) has an outer contour (14), in particular an undulatory outer contour (14), which deviates from a concentric circular arc (6).

10. Floating brake disc (1) according to one of the preceding claims, **characterised in that** the outer ring (2), the inner ring (3) and the contact region (5) are concentric.

## Revendications

1. Disque de freinage flottant (1), en particulier pour un motocycle, en particulier pour un motocycle de terrain, comprenant un anneau extérieur (2), portant une bande de freinage (23), et un anneau intérieur (3), par lequel le disque de freinage (1) est liée avec une roue de véhicule,
**caractérisé par** :
que sur un arc de cercle (6), qui se déroule d'une façon concentrique au disque de freinage (1), entre l'anneau extérieur (2) et l'anneau intérieur (3),
au moins une région de contact (5) suivant l'arc de cercle (6), en particulier plusieurs régions de contact (5) suivants l'arc de cercle (6), est/sont formée/s entre l'anneau extérieur (2) et l'anneau intérieur (3),
dans lequel l'anneau extérieur (2) et l'anneau intérieur (3) sont enchaîné dans au moins une région de contact (5) avec au moins un élément de liaison (16), en particulier un rivet,
et que, latéral d' au moins région de contact (5), l'anneau intérieur (3) comporte un épaulement (7), qui s'encliquète dans un cambrage (8) de l'anneau extérieur (2) de cette façon, qu'au moins le disque de freinage (1) étant en opération dans un véhicule, en particulier un motocycle, un surface d'appui (9) peut être façonné entre l'anneau intérieur (3) et l'anneau extérieur (2).

2. Disque de freinage (1) selon la revendication 1, **caractérisé par**:
une lisière (19) de l'épaulement (7) de l'anneau intérieur (3) s'écoule radiale et
une lisière (20) du cambrage (8) de l'anneau extérieur (2) s'écoule correspondante, en sorte qu'une surface d'appui (9) radiale entre l'anneau intérieur (3) et l'anneau extérieur (2) peut se façonner.

3. Disque de freinage flottant (1) selon une des revendications précédents, **caractérisé par**:
l'épaulement (7) est formée comme un nez ou un bec.

4. Disque de freinage flottant (1) selon une des revendications précédents, **caractérisé par**:
entre l'épaulement (7) et le cambrage (8) ce trouve un cycle de manoeuvre (24), de sorte que la surface d'appui (9) peut être façonné par un mouvement relatif, en particulier au procédé de freinage, par l'anneau intérieur (3) et l'anneau extérieur (2).

5. Disque de freinage flottant (1) selon la revendication 4, **caractérisé par**:
en opération non-freiné du véhicule, en particulier du motocycle, le cycle de manoeuvre (24) aboutit à ce que la surface d'appui (9) n'est pas façonné et qu'au moins un élément de liaison (16) remorque seule.

6. Disque de freinage flottant (1) selon une des revendications précédents, **caractérisé par**:
l'anneau intérieur (3) dans la région de l'épaulement (7) comporte des perforations (10), en particulier des perforations cunéiformes (10), qui suivent à une forme d'épaulement (7), dans lequel les angles (11) des perforations (10) sont de préférence galbées.

7. Disque de freinage flottant (1) selon une des revendications précédents, **caractérisé par**:
plusieurs régions de contact (5) sont façonné, qui sont en particulier répartit régulièrement sur l'arc de cercle (6).

8. Disque de freinage flottant (1) selon une des revendications précédents, **caractérisé par**:
sur l'anneau extérieur (2), en particulier sur la bande de freinage (23), se trouvent des ouvertures, en particulier des fissures (13) et/ou des ouvertures formées comme des trous, formé de la sorte qu'une transmission de puissance en direction de l'anneau intérieur (3) se façonne au moment du procédé de freinage.

9. Disque de freinage flottant (1) selon une des revendications précédents, **caractérisé par**:
le disque de freinage (1) a un contour extérieur (14) qui diverge d'un arc de cercle concentrique (6), en particulier un contour extérieur ondulatoire (14).

10. Disque de freinage flottant (1) selon une des revendications précédents, **caractérisé par**:
l'anneau extérieur (2), l'anneau intérieur (3) et la région de contact (5) sont concentriques.
